# EUROPEAN PATENT SPECIFICATION

(11) **EP 3 992 879 B1**
(45) Date of publication and mention of the grant of the patent: **02.12.2026**
(21) Application number: 20834664.3
(22) Date of filing: 10.03.2020
(51) Int. Cl.: G06Q 10/0833, G06Q 10/08

(54) **ADDRESS INFORMATION COLLECTION METHOD AND APPARATUS**
VERFAHREN UND VORRICHTUNG ZUM SAMMELN VON ADRESSENINFORMATIONEN
PROCÉDÉ ET APPAREIL DE COLLECTE D'INFORMATIONS D'ADRESSE

(30) Priority: 03.07.2019 CN 201910601351
(43) Date of publication of application: 04.05.2022
(73) Proprietor: Beijing Jingdong Zhenshi Information Technology Co., Ltd., Beijing 100086 (CN)
(72) Inventor: MIAO, Yanchao, Beijing 100086 (CN); TAN, Chang, Beijing 100086 (CN)
(74) Representative: FDST Patentanwälte
(86) International application number: PCT/CN2020/078577
(87) International publication number: WO 2021/000594

(56) References cited:
- CN-A- 106 031 261
- CN-A- 106 710 218
- CN-A- 108 337 309
- JP-A- 2018 063 517
- US-A1- 2015 262 123
- US-A1- 2016 371 643

## Description

### Cross-Reference to Related Applications

In accordance with the relevant provisions of the Chinese Patent Law, the present application claims priority from Chinese Patent Application No. 201910601351.0 filed on July 3, 2019.

### Technical Field

The present disclosure relates to the technical field of Internet, in particular to an address information collection method and apparatus.

### Background Art

The object tracking technology has a wide range of applications in many fields such as monitoring, human-computer interaction, in-vehicle navigation, video indexing and so on. For e-commerce platforms, users all want to ensure the transportation safety of order items; for criminal investigation scenes, real-time monitoring of suspicious objects needs to be ensured, and thereby a whole process monitoring mode is proposed.

In the process of implementing the present disclosure, the inventor found that the related art has at least the following problems:
1) the existing monitoring mode is fixed frequency point sampling:
   ① if a point sampling frequency is too dense, a large amount of garbage data will be generated in vehicles, aviation, railways and other long road sections, which will affect the transportation management;
   ② if a point sampling frequency is too sparse, an interval of a monitoring trajectory will be too large, smooth connection of the whole process cannot be realized, and operating information of a target object within interval areas cannot be known to users, which will affect the user monitoring experience;
2) a target object may encounter abnormal situations during operation, such as loss, damage, loss of contact and so on, but this abnormal information cannot be reported immediately due to the current use of a fixed frequency for uploading point sampling information.

US 2015 262 123 A1 discloses systems, methods, and devices for tracking a shipment using a wireless tracker. In such embodiments, the wireless tracker determines a location of the wireless tracker device and regulates battery usage of wireless tracker based on the location. In addition, the wireless tracker is configured to determine a current location of the wireless tracker device at one or more intervals such that the one or more intervals are based on a delivery route of the shipment. Moreover, the wireless tracker is configured to receive and verify one or more codes to for a chain of custody of the shipment. Also, the wireless tracker is configured to determine a trigger event based on the location of the wireless tracker device and/or sensor information as well as send a notification to a computer server based on the trigger event.

### Summary of the Invention

In view of this, the embodiments of the present disclosure provide an address information collection method and apparatus, which can at least solve the problem in the related art that the operating state of an object is not acquired completely as a result of fixed frequency point sampling.

In order to achieve the above objective, according to one aspect of the embodiments of the present disclosure, there is provided an address information collection method, comprising: receiving current address information of a target object transmitted by a collection device, and acquiring destination address information of the target object according to an identifier of the target object, wherein the collection device is bound to the target object; determining, based on a distance between the current address information and the destination address information, a point sampling frequency corresponding to the distance, wherein the point sampling frequency is a time interval between collecting adjacent address information; and transmitting the point sampling frequency to the collection device, such that the collection device collects the address information of the target object during operation.

In order to achieve the above objective, according to another aspect of the embodiments of the present disclosure, there is provided an address information collection apparatus, comprising: an information receiving module for receiving current address information of a target object transmitted by a collection device and acquiring destination address information of the target object according to an identifier of the target object, wherein the collection device is bound to the target object; a frequency determining module for determining, based on a distance between the current address information and the destination address information, a point sampling frequency corresponding to the distance, wherein the point sampling frequency is a time interval between collecting adjacent address information; and a frequency transmitting module for transmitting the point sampling frequency to the collection device, such that the collection device collects the address information of the target object during operation.

To achieve the above objective, according to a further aspect of the embodiments of the present disclosure, there is provided an electronic device for address information collection.

The electronic device according to the embodiments of the present disclosure comprises: one or more processors; a storage device for storing one or more programs which, when executed by the one or more processors, cause the one or more processors to implement any address information collection method described above.

To achieve the above objective, according to a further aspect of the embodiments of the present disclosure, there is provided a computer-readable medium storing thereon a computer program which, when executed by a processor, implements any address information collection method described above.

According to the solution provided in the present disclosure, one of the embodiments in the above disclosure has the following advantages or beneficial effects: during the process of the target object going to the destination, address information of the target object can be acquired in real time by means of a tracking device operating with the target object, which facilitates subsequent analysis of the operating state of the target object by the personnel; the point sampling frequency is adjusted in real time based on a distance to the destination, which avoids situations in which point samplings are too dense or sparse; for areas far away from the destination, the point sampling frequency is adjusted in consideration of the particularity of external environment such as road sections, weather and the like, which reflects the dynamic nature of frequency determination.

Further effects of the above non-conventional alternative manners will be described below with reference to specific implementations.

### Brief Description of the Drawings

Drawings are used for better interpretation of the present disclosure, but do not constitute any improper limitations of the present disclosure, wherein
FIG. 1 is a schematic diagram illustrating the main procedures of an address information collection method according to the embodiments of the present disclosure;
FIG. 2 is a schematic diagram illustrating the specific procedures of an address information collection method according to the embodiments of the present disclosure;
FIG. 3 is a schematic diagram illustrating the main modules of an address information collection apparatus according to the embodiments of the present disclosure;
FIG. 4 is an architecture diagram illustrating an exemplary system in which the embodiments of the present disclosure can be applied;
FIG. 5 is a schematic diagram illustrating the structure of a computer system of a mobile device or server suitable for carrying out the embodiments of the present disclosure.

### Detailed Description of the Embodiments

Exemplary embodiments of the present disclosure will be described as follows with reference to the accompanying drawings, including various details of the embodiments of the present disclosure to facilitate understanding, and they should be regarded as merely exemplary. Therefore, those ordinarily skilled in the art should recognize that various changes and modifications can be made to the embodiments described herein without departing from the scope and spirit of the present disclosure. Likewise, for clarity and conciseness, descriptions of well-known functions and structures are omitted below.

It should be noted that the embodiments of the present disclosure are applicable to person tracking, animal tracking, item tracking, and other scenes in which movement trajectory monitoring is required, such as item transportation state monitoring in e-commerce platforms, suspicious object tracking in criminal investigations, animal migration route analyzing in zoology, and judgment making based on the driving state of a motor vehicle as to whether or not the test evaluation criteria are met in driving test systems. The objects involved may be an order, a person, an animal, a vehicle and so on, and the corresponding identifiers may be an order number, a serial number of a person/animal, a license plate number and so on. In the present disclosure, an order is mainly taken as an example for description.

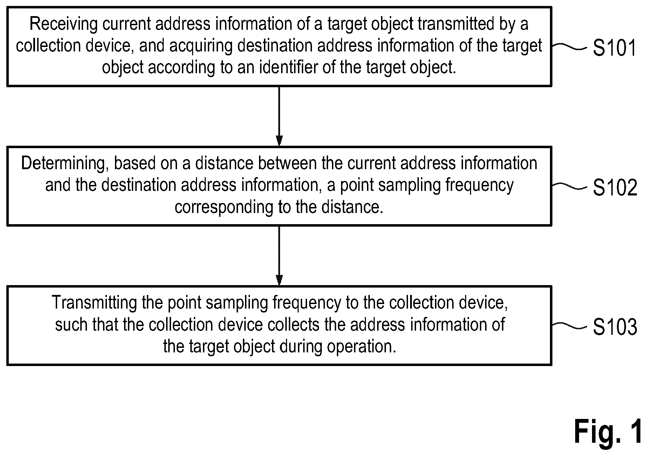

FIG. 1 shows a schematic diagram illustrating the main procedures of an address information collection method provided in the embodiments of the present disclosure, comprising the following steps:
S101: receiving current address information of a target object transmitted by a collection device, and acquiring destination address information of the target object according to an identifier of the target object, wherein the collection device is bound to the target object;
S102: determining, based on a distance between the current address information and the destination address information, a point sampling frequency corresponding to the distance, wherein the point sampling frequency is a time interval between collecting adjacent address information;
S103: transmitting the point sampling frequency to the collection device, such that the collection device collects the address information of the target object during operation.

In the above implementation, as for step S101, it can be assumed that the destination address of the target object is known in a tracking scene. For example, item transportation has a starting point and a receiving point, and person movement has a final destination.

Furthermore, for an order, an item and the like, their destinations usually do not change. However, for a person and an animal, their destinations may change at any time due to their subjective consciousness, and therefore their final destinations need to be determined constantly.

After tracking of an object is determined, a moving destination of the object is entered into a device center to bind the destination with an identifier of the object so as to facilitate subsequent extraction of the destination, such as Order 1 - Room D, Community C, Road B, District A, Beijing, Animal No. 1 - Wildlife Sanctuary E, vehicle license plate number F - point J.

Taking an order as an example, an order is a credential for the transportation and registration of items in the logistics industry at present. An item shipper can issue an item transportation task to a carrier through an order, by which the item shipper indicates the pick-up location, type and number of the items as well as various considerations during transportation.

During transportation of items, an order is usually transported together with the items. A user can query the transportation state of the items by the order number, but the user can usually find only states such as waiting for pick-up of the items, the sorting centers or the start of distribution. As for the transportation states of the road sections between sorting centers and between a sorting center and a buyer/seller, they are not known to the user.

In view of this, an order can be bound to a tracking device to determine current address information of the order by a collection device in a tracking device (or the tracking device is the collection device). For example, a tracking service is configured by a merchant in an application, and a user can choose this service when placing an order if he wants to acquire the state of the waybill in real time. During the subsequent pick-up of an item, the transportation personnel can place the item in the tracking device based on this service and delivers the item to a destination sorting center upon the completion of the pick-up.

For a person, an animal, or a non-order item, a tracker can also be installed in its outer package (such as an apparel or an accessory) or in itself (such as a vehicle itself), such that the monitoring personnel can acquire the operating state thereof by the tracker in real time.

One tracking device corresponds to one target object. For an order, the order number can be bound to the number of a tracking device through such operations as manually entering the order number into a tracking device by the transportation personnel, or scanning the order QR code by a tracking device. For a person, an animal, or a non-order item, it may be firstly numbered and then the number is bound to the number of a tracking device upon the completion of numbering. For a vehicle, a license plate number thereof can be bound to a tracking device.

After a tracking device is bound to a target object, the tracking device needs to send the binding relationship to a device center. A device center may need to monitor a plurality of objects at the same time, and it realizes one-to-one tracking service for different objects through the binding of tracking devices and target objects in combination with identifiers of the target objects, which avoids intersection of operating information of different objects.

As for step S102, the point sampling frequency is a time interval between point samplings, and point sampling is collecting and recording of location information.

In order to increase the number of point samplings while reducing the cost of point samplings, point sampling frequencies configured for different road sections are different. Specifically, a point sampling frequency needs to be determined based on a distance between a current location of the target object and a destination of the target object.
1) When the distance is greater than the predetermined distance threshold, attribute information of the target object is acquired and a point sampling frequency corresponding to the attribute information is determined.

During transportation of the target object, a fixed frequency point sampling can be used for road sections far away from the destination. For example, in areas which are more than 5 km away from the destination (only for illustration), point sampling is performed every 10 minutes for valuable items, and point sampling is performed once every 20 minutes for ordinary items.

The attribute information herein may be information on level classification such as valuable, secondary, ordinary, level 1, level 2, level 3 and so on. Taking an order as an example, the attribute information can be acquired by direct analysis of the item information when a user places an order or can also be acquired relying on a user's manually inputting of remark information, and the specific implementation is not limited in the present disclosure.

Furthermore, a target object may go through multiple areas during transportation, such as mountain roads, tunnels and so on. Taking an valuable item as an example, a point sampling frequency for uneven road sections may be higher than the above fixed frequency, for example, once every 5 minutes.

Specifically, the device center acquires geographic information of a current location using a Geographic Information System (GIS for short), and then determines a corresponding point sampling frequency based on the attribute information of the target object and the geographic information, for example, once every 5 minutes for valuable items on mountain roads, once every 10 minutes for valuable items on flat roads, and once every 10 minutes for ordinary items in mountain roads.

The point sampling frequency is selected based on the original attribute information of the object in combination with the topography information provided by the GIS system, which can ensure acquisition of actual operating information of the object in different geographical environments. For example, a user is worried about whether or not the purchased items are damaged in uneven road sections.

Furthermore, the weather may change during transportation, such as snow, rain, hail, etc. In case of little rain, the vehicle can continue to move. However, for scenes with hail or heavy rain, the vehicle may need to stop moving forward to avoid accidents.

Specifically, environment information of a current location is acquired by a meteorological monitoring system, and then a point sampling frequency is determined in combination with the attribute information. For example, the point sampling frequency is once every 5 minutes for valuable items on sunny days and once every 2 minutes for valuable items on snowy days.

The point sampling frequency is determined based on the original attribute information of the object in combination with the environment information provided by the meteorological monitoring system, which improves the monitoring of sudden changes in address information in unfavorable environment.

Furthermore, a point sampling frequency can be determined based on environment information, geographic information and item attribute information, for example, once every 1 minute for valuable items in mountainous areas on rainy days, and once every 5 minutes for ordinary items in flat roads on sunny days.

2) When the distance is less than or equal to the predetermined distance threshold, a point sampling frequency corresponding to the distance is determined according to the correspondence between the predetermined distance range threshold and the point sampling frequency.

As the target object is gradually approaching the destination, its point sampling frequency needs to be re-determined in order to analyze its actual delivery route. For example, a configuration is made that the frequency is automatically adjusted when the distance to the destination is less than or equal to 5km: the 5km is divided into three sections which are respectively 5-3km, 3-1.5km, 1.5km-0.5km, and 0.5km-0, and the corresponding point sampling frequencies are respectively 1 minute, 30 seconds, 15 seconds, and 1 second.

Taking an order as an example, when the distance of the order to a final sorting center is less than 1km (only for illustration, other numerical values may be used), the state of the order is switched to a shipment and distribution link at the sorting center. Or, after the order is distributed to the final sorting center, the order enters a distribution link.

Generally, the shorter the distance to the destination, the higher the point sampling frequency; the shorter the distance to the destination, the more attention the user will pay. For example, to capture a suspicious person, a location of the suspicious person needs to be accurately analyzed, and when a user sees the delivery of the order, the user may wait for the delivery before going out.

For step S103, the collection device performs point sampling based on the point sampling frequency transmitted from the device center to acquire the current address information of the target object and transmit the acquired address information to the device center, such that the operating state of the target object will be displayed or accumulated in the device center (for example, in the form of a data report) for building of a movement trajectory of the target object.

The movement trajectory may contain some fixed locations that the target object passes through, in addition to the address information collected by the collection device. For example, for an order, when a user places the order, the e-commerce system will confirm information on a starting site, a destination site and intermediate sorting centers of the order based on the user's order information, and then synchronize the latitude and longitude information of these sites to the device center, such that the movement trajectory also contains information on the sorting centers that the target object passes through in addition to the address information of the intermediate road sections when the user queries the order transportation state subsequently.

For an order, a user can query the transportation state of the order by the order number. In addition, the device center can also transmit, based on a mobile phone number or an account of the user in the order, the latest transportation state, movement trajectory and the like of the order to the mobile phone or account of the user to realize the purpose of pushing the transportation state without the user's manual query operations.

Likewise, for a person, an animal, or a non-order item, its operating state can be directly reflected on a target screen, such as a monitoring center screen, such that the monitoring personnel can directly view its movement trajectory.

During the process of a target object going to a destination, the method provided in the above embodiments can acquire address information of the target object in real time by a tracking device operating with the target object, which facilitates subsequent analysis of the operating state of the target object by the personnel.

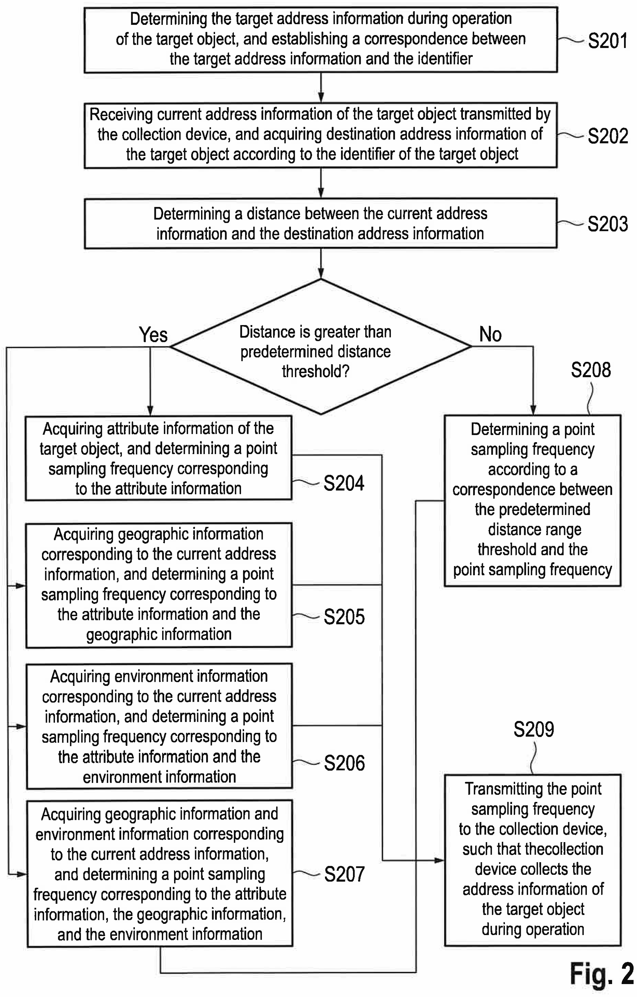

FIG. 2 shows a schematic diagram illustrating the specific procedures of an address information collection method according to the embodiments of the present disclosure, comprising the following steps:
S201: determining target address information during operation of the target object, and establishing a correspondence between the target address information and the identifier, wherein the identifier is one of an order number, a serial number, and a license plate number;
S202: receiving current address information of the target object transmitted by the collection device, and acquiring destination address information of the target object according to the identifier of the target object, wherein the collection device is bound to the target object;
S203: determining a distance between the current address information and the destination address information;
S204: when the distance is greater than the predetermined distance threshold, acquiring attribute information of the target object, and determining a point sampling frequency corresponding to the attribute information;
S205: acquiring geographic information corresponding to the current address information, and determining a point sampling frequency corresponding to the attribute information and the geographic information;
S206: acquiring environment information corresponding to the current address information, and determining a point sampling frequency corresponding to the attribute information and the environment information;
S207: acquiring geographic information and environment information corresponding to the current address information, and determining a point sampling frequency corresponding to the attribute information, the geographic information, and the environment information;
S208: when the distance is less than or equal to the predetermined distance threshold, determining, based on a correspondence between the predetermined distance range threshold and a point sampling frequency, a point sampling frequency corresponding to the distance;
S209: transmitting the point sampling frequency to the collection device, such that the collection device collects the address information of the target object during operation.

In the above implementation, for steps S201 to S209, reference can be made to the descriptions shown in FIG. 1 (details are omitted).

In the above implementation, the binding relationship between the target object and the tracking device can be unbound after the target object arrives at the destination.

Also taking an order as an example, the order is usually distributed by the transportation personnel in a final distribution link. After transporting the order to a destination or an address (for example, a self-pickup cabinet) specified by the user, the distribution personnel can unbind the relationship manually, for example, unbind the relationship by scanning a code, and at the same time, terminates the distribution task and uploads the distribution completion information.

In addition, the number of tracking devices is different at the respective distribution sites, and the number at site A may be much larger than that at site B. Tracking device inventory allocation can be carried out between the respective distribution sites to balance the device inventory at the respective distribution sites. For sites at which more items are shipped, the number of tracking devices may be larger than sites at which fewer items are shipped, such as Guangzhou and Tibet.

During operation of the target object, an unexpected situation may occur. The monitoring of the unexpected situation can be carried out by a tracking device or a monitoring device in the tracking device. The monitoring device monitors in real time whether the target object is in a normal state. As for situations in which the outer package of the target object is damaged, the location of the target object does not change within a certain period of time, and separation from the target object causes a loss of contact with a suspicious person, they can be all regarded as abnormal situations.

These abnormal situations need to be reported to the monitoring personnel timely. Even if the point sampling frequency is not reached, the abnormal information needs to be uploaded to the device center to facilitate timely processing by the monitoring personnel. For example, if the outer package of an item is damaged, the monitoring personnel would notify the transportation personnel to inspect the outer package and the like of the transported item; if a suspicious person is out of contact, the monitoring personnel would notify nearby criminal investigators to search for the suspicious person near the location where the tracking device falls off, etc.; in case of a driving test, the monitoring personnel would notify that the vehicle is damaged and needs to be repaired.

Apart from the above, abnormal situations such as network abnormality may also exist. For example, the collection device needs to interact with the device center after collecting information, but the interaction would be interrupted if the network is abnormal, which is an abnormal situation. After that, the device will periodically attempt to contact the device center, and the network abnormality information will be uploaded if the contact is successful,

As for the device center, it interacts with multiple collection devices at the same time, and it can also initiatively issue an alarm if a device is not successfully connected for a long time.

The method provided in the above embodiments adjusts the point sampling frequency in real time based on a distance to the destination in the tracking process, which avoids the situations in which the point samplings are too dense or too sparse. When a target object is in an abnormal state, the abnormal information will be uploaded regardless of whether the point sampling frequency is reached so as to facilitate timely processing of the monitoring personnel.

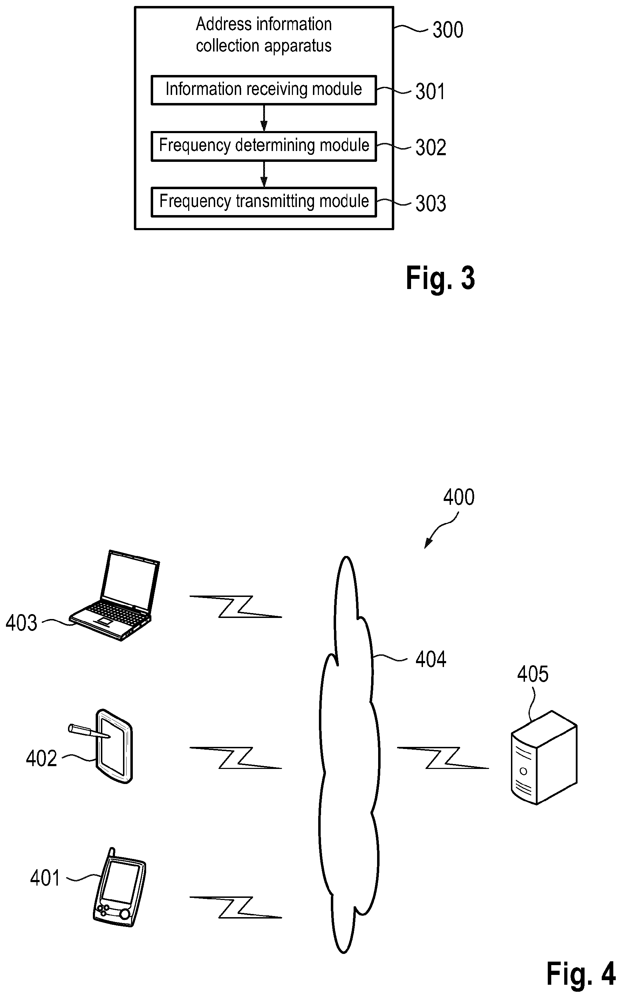

FIG. 3 is a schematic diagram illustrating the main modules of an address information collection apparatus 300 according to the embodiments of the present disclosure, comprising:
an information receiving module 301 for receiving current address information of a target object transmitted by a collection device and acquiring destination address information of the target object according to an identifier of the target object, wherein the collection device is bound to the target object;
a frequency determining module 302 for determining, based on a distance between the current address information and the destination address information, a point sampling frequency corresponding to the distance, wherein the point sampling frequency is a time interval between collecting adjacent address information;
a frequency transmitting module 303 for transmitting the point sampling frequency to the collection device, such that the collection device collects the address information of the target object during operation.

In the apparatus according to the embodiments of the present disclosure, the frequency determining module 302 is used for:
when the distance is greater than the predetermined distance threshold, acquiring attribute information of the target object, and determining a point sampling frequency corresponding to the attribute information;
when the distance is less than or equal to the predetermined distance threshold, determining a point sampling frequency according to the correspondence between the predetermined distance range threshold and the point sampling frequency.

In the apparatus according to the embodiments of the present disclosure, the frequency determining module 302 is further used for:
acquiring geographic information corresponding to the current address information, and determining a point sampling frequency corresponding to the attribute information and the geographic information; or
acquiring current environment information corresponding to the current address information, and determining a point sampling frequency corresponding to the attribute information and the current environment information.

The apparatus according to the embodiments of the present disclosure also comprises an abnormal information module 304 (not shown) which is used for: if it is detected that the target object is currently in an abnormal state and the point sampling frequency is not reached, uploading the monitored abnormal information.

The apparatus according to the embodiments of the present disclosure also comprises a relationship establishing module 305 (not shown) which is used for:
determining the target address information during operation of the target object, and establishing a correspondence between the target address information and the identifier, wherein the identifier is one of an order number, a serial number, and a license plate number.

In addition, the specific implementations of the apparatus in the embodiments of the present disclosure have been described in details in the above method, and therefore repetitions are omitted herein.

FIG. 4 shows an exemplary system architecture 400 in which the embodiments of the present disclosure can be applied.

As shown in FIG. 4, the system architecture 400 may comprise terminal devices 401, 402, 403, a network 404, and a server 405 (only for illustration). The network 404 is a medium for providing communication links between the terminal devices 401, 402, 403 and the server 405. The network 404 may include various connection types, such as wired or wireless communication links, fiber optic cables, and so on.

A user can use the terminal devices 401, 402, and 403 to interact with the server 405 via the network 404, so as to receive or send messages and so on. Various communication client applications, such as shopping applications, web browser applications, search applications, instant messaging tools, email clients, social platform software and the like (only for illustration), may be installed on the terminal devices 401, 402, and 403.

The terminal devices 401, 402, and 403 may be various electronic devices that have a display and support web browsing, including but not limited to smart phones, tablet computers, laptop computers, desktop computers, and so on.

The server 405 may be a server that provides various services, such as a backend management server (only for illustration) that provides support for shopping websites browsed by users using the terminal devices 401, 402, and 403. The backend management server can analyze and process the data such as a received product information query request, and feedback the processing results (such as target push messages, product information-only for illustration) to the terminal devices.

It should be noted that the method provided in the embodiments of the present disclosure is generally performed by the server 405, and accordingly, the apparatus is generally provided in the server 405.

It should be understood that the number of the terminal devices, networks, and servers in FIG. 4 is only for illustration. According to the implementation requirements, there may be any number of terminal devices, networks, and servers.

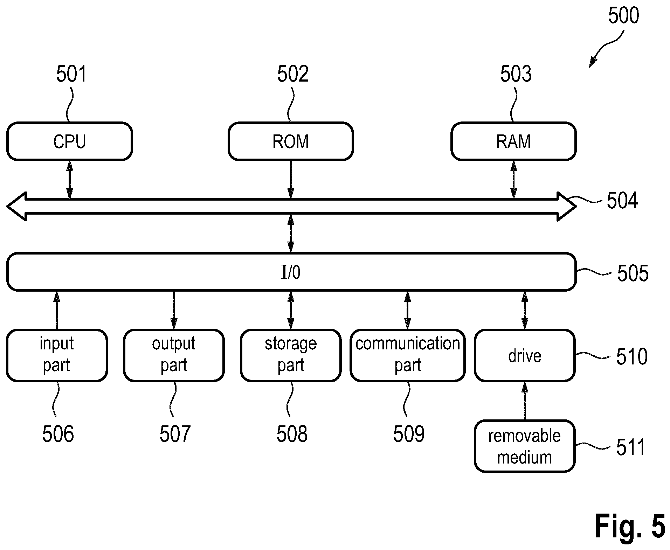

Referring now to FIG. 5, it shows a schematic diagram illustrating the structure of a computer system 500 of the mobile devices suitable for carrying out the embodiments of the present disclosure. The terminal devices shown in FIG. 5 are only taken as an example, and should not constitute any limitations on the function and application scope f the embodiments of the present disclosure.

As shown in FIG. 5, the computer system 500 comprises a central processing unit (CPU) 501, which can perform various appropriate actions and processing based on a program stored in a read-only memory (ROM) 502 or a program loaded from a storage part 508 into a random access memory (RAM) 503. In the RAM 503, various programs and data required for the operation of the system 500 are also stored. The CPU 501, the ROM 502, and the RAM 503 are connected to each other through a bus 504. An input/output (I/O) interface 505 is also connected to the bus 504.

The following components are connected to the I/O interface 505: an input part 506 including a keyboard, a mouse and the like; an output part 507 including a cathode ray tube (CRT), a liquid crystal display (LCD) and the like as well as a speaker and the like; a storage part 508 including a hard disk and the like; and a communication part 509 including a network interface card such as a LAN card, a modem and the like. The communication part 509 performs communication processing via a network such as the Internet. The drive 510 is also connected to the I/O interface 505 as needed. A removable medium 511, such as a magnetic disk, an optical disk, a magneto-optical disk, a semiconductor memory or the like, is installed on the drive 510 as needed, such that the computer program read from the removable medium 51 is installed into the storage part 508 as needed.

Particularly, according to the embodiments disclosed in the present disclosure, the process described above with reference to the flowchart can be implemented as a computer software program. For example, the embodiments disclosed in the present disclosure comprise a computer program product comprising a computer program carried on a computer-readable medium, the computer program including a program code for performing the method shown in the flowchart. In such embodiments, the computer program may be downloaded and installed from the network via the communication part 509, and/or installed from the removable medium 511. When the computer program is executed by the central processing unit (CPU) 501, the above functions defined in the system of the present disclosure are executed.

It should be noted that the computer-readable medium disclosed in the present disclosure may be a computer-readable signal medium, a computer-readable storage medium, or any combination thereof. The computer-readable storage medium may be, for example, but not limited to, an electrical, magnetic, optical, electromagnetic, infrared or semiconductor system, apparatus or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read only memory (EPROM or flash memory), an optical fiber, a portable compact disk read only memory (CD-ROM), an optical storage device, a magnetic storage device, or any suitable combination thereof. In the present disclosure, the computer-readable storage medium may be any tangible medium that contains or stores a program which may be used by or in combination with an instruction execution system, apparatus or device. However, in the present disclosure, the computer-readable signal medium may include a data signal propagated in a baseband or as a portion of a carrier, wherein a computer-readable program code is carried. A data signal propagated in this way may take various forms, including but not limited to an electromagnetic signal, an optical signal, or any suitable combination thereof. The computer-readable signal medium may also be any computer-readable medium other than the computer-readable storage medium. The computer-readable medium may send, propagate or transmit a program for use by or in combination with an instruction execution system, apparatus or device. A program code included on the computer-readable medium can be transmitted by any suitable medium, including but not limited to, wireless, wire, an optical cable, RF or the like, or any suitable combination thereof.

The flowcharts and block diagrams in the accompanying drawings illustrate the architecture, functions, and operations of the possible implementations of the system, method, and computer program product according to various embodiments of the present disclosure. In this regard, each block in the flowcharts or block diagrams may represent a module, a program segment or a portion of a code, containing one or more executable instructions for realizing specified logic functions. It should be also noted that: in some alternative implementations, the functions marked in the blocks may also take place in an order different from the order marked in the accompanying drawings. For example, two blocks shown one after the other may be actually executed in parallel substantially, or they can sometimes be executed in a reverse order, depending on the involved functions. It should be also noted that each block in the block diagrams or flowcharts and a combination of the blocks in the block diagrams or flowcharts can be implemented by a dedicated hardware-based system that performs specified functions or operations, or can be implemented by a combination of dedicated hardware and computer instructions.

The involved modules described in the embodiments of the present disclosure can be implemented in software or hardware. The described modules may also be provided in a processor which may be, for example, described as follows: a processor including an information receiving module, a frequency determining module and a frequency transmitting module. The names of these modules do not constitute limitations on the modules themselves in certain circumstances. For example, the frequency determination module can also be described as a "point sampling frequency determining module".

**In** another aspect, the present disclosure also provides a computer-readable medium, which may be included in the devices described in the above embodiments or and may also exist separately without being assembled into the devices. The above computer-readable medium carries one or more programs which, when executed by one of the devices, cause the device to perform operations including:
receiving current address information of a target object transmitted by a collection device, and acquiring destination address information of the target object according to an identifier of the target object, wherein the collection device is bound to the target object;
determining, based on a distance between the current address information and the destination address information, a point sampling frequency corresponding to the distance, wherein the point sampling frequency is a time interval between collecting adjacent address information;
transmitting the point sampling frequency to the collection device, such that the collection device collects the address information of the target object during operation.

Compared with the related art, the technical solution of the embodiments of the present disclosure has the following beneficial effects:
1) during the process of the target object going to the destination, the address information of the target object can be acquired in real time by a tracking device operating with the target object, which facilitates subsequent analysis of the operating state of the target object by the personnel;
2) the point sampling frequency is adjusted in real time based on a distance to the destination during the tracking process, which avoids situations in which the points samplings are too dense or sparse;
3) for areas far away from the destination, the point sampling frequency is adjusted in consideration of the particularity of external environment such as road sections, weather and the like, which is different from a fixed frequency and reflects the dynamic nature of the frequency determining manner;
4) when the target object is in an abnormal state, the abnormal information will be uploaded regardless of whether the point sampling frequency is reached so as to facilitate timely processing of the monitoring personnel.

The above specific implementations do not constitute limitations on the protection scope of the present disclosure. Those skilled in the art should understand that various modifications, combinations, sub-combinations, and substitutions may be made depending on the design requirements and other factors.

## Claims

1. A computer-implemented address information collection method, comprising:
by one or more processors, receiving current address information of a target object transmitted by a collection device, and acquiring destination address information of the target object according to an identifier of the target object, wherein the collection device is bound to the target object;
by one or more processors, determining, based on a distance between the current address information and the destination address information, a point sampling frequency corresponding to the distance, wherein the point sampling frequency is a time interval between collecting adjacent address information; and
by one or more processors, transmitting the point sampling frequency to the collection device, such that the collection device collects the address information of the target object during operation,
wherein determining a point sampling frequency corresponding to the distance comprises:
when the distance is greater than the predetermined distance threshold, acquiring attribute information of the target object, and determining a point sampling frequency corresponding to the attribute information, wherein said attribute information is information on a level classification and can be acquired by direct analysis of the target object or based on a remark of a user;
when the distance is less than or equal to the predetermined distance threshold, determining, based on a correspondence between the predetermined distance range threshold and a point sampling frequency, a point sampling frequency corresponding to the distance.

2. The method according to claim 1, wherein acquiring attribute information of the target object and determining a point sampling frequency corresponding to the attribute information further comprise:
acquiring geographic information corresponding to the current address information, and determining a sampling frequency corresponding to the attribute information and the geographic information; or
acquiring current environment information corresponding to the current address information, and determining a sampling frequency corresponding to the attribute information and the current environment information.

3. The method according to claim 1, wherein the method further comprises:
if it is detected that the target object is currently in an abnormal state, in which the target object encounters one of loss, damage or loss of contact, and the point sampling frequency is not reached, uploading the monitored abnormal information.

4. The method according to claim 1, wherein before receiving the current address information of the target object transmitted by the collection device, the method further comprises:
determining the target address information during operation of the target object, and establishing a correspondence between the target address information and the identifier, wherein the identifier is one of an order number, a serial number, and a license plate number.

5. An electronic device, comprising:
one or more processors;
a storage device for storing one or more programs which, when executed by the one or more processors, cause the one or more processors to implement an address information collection method, the method comprising:
receiving current address information of a target object transmitted by a collection device, and acquiring destination address information of the target object according to an identifier of the target object, wherein the collection device is bound to the target object;
determining, based on a distance between the current address information and the destination address information, a point sampling frequency corresponding to the distance, wherein the point sampling frequency is a time interval between collecting adjacent address information; and
transmitting the point sampling frequency to the collection device, such that the collection device collects the address information of the target object during operation,
wherein determining a point sampling frequency corresponding to the distance comprises:
when the distance is greater than the predetermined distance threshold, acquiring attribute information of the target object, and determining a point sampling frequency corresponding to the attribute information, wherein said attribute information is information on a level classification and can be acquired by direct analysis of the target object or based on a remark of a user;
when the distance is less than or equal to the predetermined distance threshold, determining, based on a correspondence between the predetermined distance range threshold and a point sampling frequency, a point sampling frequency corresponding to the distance.

6. The electronic device according to claim 5, wherein acquiring attribute information of the target object and determining a point sampling frequency corresponding to the attribute information further comprise:
acquiring geographic information corresponding to the current address information, and determining a sampling frequency corresponding to the attribute information and the geographic information; or
acquiring current environment information corresponding to the current address information, and determining a sampling frequency corresponding to the attribute information and the current environment information.

7. The electronic device according to claim 5, wherein the method further comprises:
if it is detected that the target object is currently in an abnormal state, in which the target object encounters one of loss, damage or loss of contact, and the point sampling frequency is not reached, uploading the monitored abnormal information.

8. The electronic device according to claim 5, wherein before receiving the current address information of the target object transmitted by the collection device, the method further comprises:
determining the target address information during operation of the target object, and establishing a correspondence between the target address information and the identifier, wherein the identifier is one of an order number, a serial number, and a license plate number.

9. A computer-readable medium storing thereon a computer program which, when executed by a processor, implements an address information collection method, the method comprising:
receiving current address information of a target object transmitted by a collection device, and acquiring destination address information of the target object according to an identifier of the target object, wherein the collection device is bound to the target object;
determining, based on a distance between the current address information and the destination address information, a point sampling frequency corresponding to the distance, wherein the point sampling frequency is a time interval between collecting adjacent address information; and
transmitting the point sampling frequency to the collection device, such that the collection device collects the address information of the target object during operation,
wherein determining a point sampling frequency corresponding to the distance comprises:
when the distance is greater than the predetermined distance threshold, acquiring attribute information of the target object, and determining a point sampling frequency corresponding to the attribute information, wherein said attribute information is information on a level classification and can be acquired by direct analysis of the target object or based on a remark of a user;
when the distance is less than or equal to the predetermined distance threshold, determining, based on a correspondence between the predetermined distance range threshold and a point sampling frequency, a point sampling frequency corresponding to the distance.

10. The computer-readable medium according to claim 9, wherein acquiring attribute information of the target object and determining a point sampling frequency corresponding to the attribute information further comprise:
acquiring geographic information corresponding to the current address information, and determining a sampling frequency corresponding to the attribute information and the geographic information; or
acquiring current environment information corresponding to the current address information, and determining a sampling frequency corresponding to the attribute information and the current environment information.

11. The computer-readable medium according to claim 9, wherein the method further comprises:
if it is detected that the target object is currently in an abnormal state, in which the target object encounters one of loss, damage or loss of contact, and the point sampling frequency is not reached, uploading the monitored abnormal information.

12. The computer-readable medium according to claim 9, wherein before receiving the current address information of the target object transmitted by the collection device, the method further comprises:
determining the target address information during operation of the target object, and establishing a correspondence between the target address information and the identifier, wherein the identifier is one of an order number, a serial number, and a license plate number.

## Patentansprüche

1. Computerimplementiertes Adressinformationserfassungsverfahren, das Folgendes umfasst:
durch einen oder mehrere Prozessoren Empfangen von durch eine Erfassungseinrichtung übertragenen aktuellen Adressinformationen eines Zielobjekts und Erhalten von Bestimmungsort-Adressinformationen des Zielobjekts gemäß einer Kennung des Zielobjekts, wobei die Erfassungseinrichtung an das Zielobjekt gebunden ist;
durch einen oder mehrere Prozessoren Bestimmen, basierend auf einer Entfernung zwischen den aktuellen Adressinformationen und den Bestimmungsort-Adressinformationen, einer der Entfernung entsprechenden Punktabtastfrequenz, wobei die Punktabtastfrequenz ein Zeitintervall zwischen Erfassungen benachbarter Adressinformationen ist; und
durch einen oder mehrere Prozessoren Übertragen der Punktabtastfrequenz an die Erfassungseinrichtung, so dass die Erfassungseinrichtung die Adressinformationen des Zielobjekts während des Betriebs erfasst,
wobei das Bestimmen einer der Entfernung entsprechenden Punktabtastfrequenz Folgendes umfasst:
wenn die Entfernung größer als der vorbestimmte Entfernungsschwellenwert ist, Erhalten von Attributinformationen des Zielobjekts und Bestimmen einer den Attributinformationen entsprechenden Punktabtastfrequenz, wobei die Attributinformationen Informationen über eine Stufenklassifizierung sind und durch direkte Analyse des Zielobjekts oder basierend auf einer Bemerkung eines Benutzers erhalten werden können;
wenn die Entfernung kleiner als oder gleich dem vorbestimmten Entfernungsschwellenwert ist, Bestimmen, basierend auf einer Zuordnung zwischen dem vorbestimmten Entfernungsbereichsschwellenwert und einer Punktabtastfrequenz, einer der Entfernung entsprechenden Punktabtastfrequenz.

2. Verfahren nach Anspruch 1, wobei das Erhalten von Attributinformationen des Zielobjekts und das Bestimmen einer den Attributinformationen entsprechenden Punktabtastfrequenz ferner Folgendes umfassen:
Erhalten von den aktuellen Adressinformationen entsprechenden geografischen Informationen und Bestimmen einer den Attributinformationen und den geografischen Informationen entsprechenden Abtastfrequenz; oder
Erhalten von den aktuellen Adressinformationen entsprechenden aktuellen Umgebungsinformationen und Bestimmen einer den Attributinformationen und den aktuellen Umgebungsinformationen entsprechenden Abtastfrequenz.

3. Verfahren nach Anspruch 1, wobei das Verfahren ferner Folgendes umfasst:
wenn detektiert wird, dass sich das Zielobjekt aktuell in einem anormalen Zustand befindet, in dem das Zielobjekt entweder einen Verlust oder eine Beschädigung oder einen Kontaktverlust erfährt, und die Punktabtastfrequenz nicht erreicht wird, Hochladen der überwachten anormalen Informationen.

4. Verfahren nach Anspruch 1, wobei das Verfahren vor dem Empfangen der durch die Erfassungseinrichtung übertragenen aktuellen Adressinformationen des Zielobjekts ferner Folgendes umfasst:
Bestimmen der Zieladressinformationen während des Betriebs des Zielobjekts und Herstellen einer Zuordnung zwischen den Zieladressinformationen und der Kennung, wobei die Kennung eine Bestellnummer oder eine Seriennummer oder ein Kraftfahrzeugkennzeichen ist.

5. Elektronische Einrichtung, die Folgendes umfasst:
einen oder mehrere Prozessoren;
eine Speichereinrichtung zum Speichern eines oder mehrerer Programme, die, wenn sie durch den einen oder die mehreren Prozessoren ausgeführt werden, bewirken, dass der eine oder die mehreren Prozessoren ein Adressinformationserfassungsverfahren implementieren, wobei das Verfahren Folgendes umfasst:
Empfangen von durch eine Erfassungseinrichtung übertragenen aktuellen Adressinformationen eines Zielobjekts und Erhalten von Bestimmungsort-Adressinformationen des Zielobjekts gemäß einer Kennung des Zielobjekts, wobei die Erfassungseinrichtung an das Zielobjekt gebunden ist;
Bestimmen, basierend auf einer Entfernung zwischen den aktuellen Adressinformationen und den Bestimmungsort-Adressinformationen, einer der Entfernung entsprechenden Punktabtastfrequenz, wobei die Punktabtastfrequenz ein Zeitintervall zwischen Erfassungen benachbarter Adressinformationen ist; und
Übertragen der Punktabtastfrequenz an die Erfassungseinrichtung, so dass die Erfassungseinrichtung die Adressinformationen des Zielobjekts während des Betriebs erfasst,
wobei das Bestimmen einer der Entfernung entsprechenden Punktabtastfrequenz Folgendes umfasst:
wenn die Entfernung größer als der vorbestimmte Entfernungsschwellenwert ist, Erhalten von Attributinformationen des Zielobjekts und Bestimmen einer den Attributinformationen entsprechenden Punktabtastfrequenz, wobei die Attributinformationen Informationen über eine Stufenklassifizierung sind und durch direkte Analyse des Zielobjekts oder basierend auf einer Bemerkung eines Benutzers erhalten werden können;
wenn die Entfernung kleiner als oder gleich dem vorbestimmten Entfernungsschwellenwert ist, Bestimmen, basierend auf einer Zuordnung zwischen dem vorbestimmten Entfernungsbereichsschwellenwert und einer Punktabtastfrequenz, einer der Entfernung entsprechenden Punktabtastfrequenz.

6. Elektronische Einrichtung nach Anspruch 5, wobei das Erhalten von Attributinformationen des Zielobjekts und das Bestimmen einer den Attributinformationen entsprechenden Punktabtastfrequenz ferner Folgendes umfassen:
Erhalten von den aktuellen Adressinformationen entsprechenden geografischen Informationen und Bestimmen einer den Attributinformationen und den geografischen Informationen entsprechenden Abtastfrequenz; oder
Erhalten von den aktuellen Adressinformationen entsprechenden aktuellen Umgebungsinformationen und Bestimmen einer den Attributinformationen und den aktuellen Umgebungsinformationen entsprechenden Abtastfrequenz.

7. Elektronische Einrichtung nach Anspruch 5, wobei das Verfahren ferner Folgendes umfasst:
wenn detektiert wird, dass sich das Zielobjekt aktuell in einem anormalen Zustand befindet, in dem das Zielobjekt entweder einen Verlust oder eine Beschädigung oder einen Kontaktverlust erfährt, und die Punktabtastfrequenz nicht erreicht wird, Hochladen der überwachten anormalen Informationen.

8. Elektronische Einrichtung nach Anspruch 5, wobei das Verfahren vor dem Empfangen der durch die Erfassungseinrichtung übertragenen aktuellen Adressinformationen des Zielobjekts ferner Folgendes umfasst:
Bestimmen der Zieladressinformationen während des Betriebs des Zielobjekts und Herstellen einer Zuordnung zwischen den Zieladressinformationen und der Kennung, wobei die Kennung eine Bestellnummer oder eine Seriennummer oder ein Kraftfahrzeugkennzeichen ist.

9. Computerlesbares Medium, auf dem ein Computerprogramm gespeichert ist, das, wenn es durch einen Prozessor ausgeführt wird, ein Adressinformationserfassungsverfahren implementiert, wobei das Verfahren Folgendes umfasst:
Empfangen von durch eine Erfassungseinrichtung übertragenen aktuellen Adressinformationen eines Zielobjekts und Erhalten von Bestimmungsort-Adressinformationen des Zielobjekts gemäß einer Kennung des Zielobjekts, wobei die Erfassungseinrichtung an das Zielobjekt gebunden ist;
Bestimmen, basierend auf einer Entfernung zwischen den aktuellen Adressinformationen und den Bestimmungsort-Adressinformationen, einer der Entfernung entsprechenden Punktabtastfrequenz, wobei die Punktabtastfrequenz ein Zeitintervall zwischen Erfassungen benachbarter Adressinformationen ist; und
Übertragen der Punktabtastfrequenz an die Erfassungseinrichtung, so dass die Erfassungseinrichtung die Adressinformationen des Zielobjekts während des Betriebs erfasst,
wobei das Bestimmen einer der Entfernung entsprechenden Punktabtastfrequenz Folgendes umfasst:
wenn die Entfernung größer als der vorbestimmte Entfernungsschwellenwert ist, Erhalten von Attributinformationen des Zielobjekts und Bestimmen einer den Attributinformationen entsprechenden Punktabtastfrequenz, wobei die Attributinformationen Informationen über eine Stufenklassifizierung sind und durch direkte Analyse des Zielobjekts oder basierend auf einer Bemerkung eines Benutzers erhalten werden können;
wenn die Entfernung kleiner als oder gleich dem vorbestimmten Entfernungsschwellenwert ist, Bestimmen, basierend auf einer Zuordnung zwischen dem vorbestimmten Entfernungsbereichsschwellenwert und einer Punktabtastfrequenz, einer der Entfernung entsprechenden Punktabtastfrequenz.

10. Computerlesbares Medium nach Anspruch 9, wobei das Erhalten von Attributinformationen des Zielobjekts und das Bestimmen einer den Attributinformationen entsprechenden Punktabtastfrequenz ferner Folgendes umfassen:
Erhalten von den aktuellen Adressinformationen entsprechenden geografischen Informationen und Bestimmen einer den Attributinformationen und den geografischen Informationen entsprechenden Abtastfrequenz; oder
Erhalten von den aktuellen Adressinformationen entsprechenden aktuellen Umgebungsinformationen und Bestimmen einer den Attributinformationen und den aktuellen Umgebungsinformationen entsprechenden Abtastfrequenz.

11. Computerlesbares Medium nach Anspruch 9, wobei das Verfahren ferner Folgendes umfasst:
wenn detektiert wird, dass sich das Zielobjekt aktuell in einem anormalen Zustand befindet, in dem das Zielobjekt entweder einen Verlust oder eine Beschädigung oder einen Kontaktverlust erfährt, und die Punktabtastfrequenz nicht erreicht wird, Hochladen der überwachten anormalen Informationen.

12. Computerlesbares Medium nach Anspruch 9, wobei das Verfahren vor dem Empfangen der durch die Erfassungseinrichtung übertragenen aktuellen Adressinformationen des Zielobjekts ferner Folgendes umfasst:
Bestimmen der Zieladressinformationen während des Betriebs des Zielobjekts und Herstellen einer Zuordnung zwischen den Zieladressinformationen und der Kennung, wobei die Kennung eine Bestellnummer oder eine Seriennummer oder ein Kraftfahrzeugkennzeichen ist.

## Revendications

1. Procédé mis en œuvre par ordinateur de collecte d'informations d'adresse, comprenant :
par un ou plusieurs processeurs, la réception d'informations d'adresse actuelle d'un objet cible transmises par un dispositif de collecte, et l'acquisition d'informations d'adresse de destination de l'objet cible d'après un identifiant de l'objet cible, le dispositif de collecte étant lié à l'objet cible ;
par un ou plusieurs processeurs, la détermination, sur la base d'une distance entre les informations d'adresse actuelle et les informations d'adresse de destination, d'une fréquence d'échantillonnage ponctuel correspondant à la distance, la fréquence d'échantillonnage ponctuel étant un intervalle de temps entre la collecte d'informations d'adresse adjacentes ; et
par un ou plusieurs processeurs, la transmission de la fréquence d'échantillonnage ponctuel au dispositif de collecte, de telle sorte que le dispositif de collecte collecte les informations d'adresse de l'objet cible pendant le fonctionnement,
la détermination d'une fréquence d'échantillonnage ponctuel qui correspond à la distance comprenant :
lorsque la distance est supérieure au seuil de distance prédéterminé, l'acquisition d'informations d'attribut de l'objet cible, et la détermination d'une fréquence d'échantillonnage ponctuel correspondant aux informations d'attribut, lesdites informations d'attribut étant des informations sur une classification de niveau et pouvant être acquises par analyse directe de l'objet cible ou sur la base d'une remarque d'un utilisateur ;
lorsque la distance est inférieure ou égale au seuil de distance prédéterminé, la détermination, à partir d'une correspondance entre le seuil de plage de distance prédéterminé et une fréquence d'échantillonnage ponctuel, d'une fréquence d'échantillonnage ponctuel correspondant à la distance.

2. Procédé selon la revendication 1, l'acquisition d'informations d'attribut de l'objet cible et la détermination d'une fréquence d'échantillonnage ponctuel correspondant aux informations d'attribut comprenant en outre :
l'acquisition d'informations géographiques correspondant aux informations d'adresse actuelle, et la détermination d'une fréquence d'échantillonnage correspondant aux informations d'attribut et aux informations géographiques ; ou
l'acquisition d'informations d'environnement actuel correspondant aux informations d'adresse actuelle, et la détermination d'une fréquence d'échantillonnage correspondant aux informations d'attribut et aux informations d'environnement actuel.

3. Procédé selon la revendication 1, le procédé comprenant en outre :
s'il est détecté que l'objet cible se trouve actuellement dans un état anormal, dans lequel l'objet cible rencontre une perte, un dommage ou une perte de contact, et que la fréquence d'échantillonnage ponctuel n'est pas atteinte, le téléchargement des informations anormales surveillées.

4. Procédé selon la revendication 1, le procédé comprenant en outre, avant de recevoir les informations d'adresse actuelles de l'objet cible transmises par le dispositif de collecte :
la détermination des informations d'adresse cible pendant le fonctionnement de l'objet cible, et l'établissement d'une correspondance entre les informations d'adresse cible et l'identifiant, l'identifiant étant un numéro parmi un numéro de commande, un numéro de série et un numéro de plaque d'immatriculation.

5. Dispositif électronique, comprenant :
un ou plusieurs processeurs ;
un dispositif de stockage pour stocker un ou plusieurs programmes qui, lorsqu'ils sont exécutés par le ou les processeurs, amènent le ou les processeurs à mettre en œuvre un procédé de collecte d'informations d'adresse, le procédé comprenant :
la réception d'informations d'adresse actuelle d'un objet cible transmises par un dispositif de collecte, et l'acquisition d'informations d'adresse de destination de l'objet cible d'après un identifiant de l'objet cible, le dispositif de collecte étant lié à l'objet cible ;
la détermination, sur la base d'une distance entre les informations d'adresse actuelle et les informations d'adresse de destination, d'une fréquence d'échantillonnage ponctuel correspondant à la distance, la fréquence d'échantillonnage ponctuel étant un intervalle de temps entre la collecte d'informations d'adresse adjacentes ; et
la transmission de la fréquence d'échantillonnage ponctuel au dispositif de collecte, de telle sorte que le dispositif de collecte collecte les informations d'adresse de l'objet cible pendant le fonctionnement,
la détermination d'une fréquence d'échantillonnage ponctuel qui correspond à la distance comprenant :
lorsque la distance est supérieure au seuil de distance prédéterminé, l'acquisition d'informations d'attribut de l'objet cible, et la détermination d'une fréquence d'échantillonnage ponctuel correspondant aux informations d'attribut, lesdites informations d'attribut étant des informations sur une classification de niveau et pouvant être acquises par analyse directe de l'objet cible ou sur la base d'une remarque d'un utilisateur ;
lorsque la distance est inférieure ou égale au seuil de distance prédéterminé, la détermination, à partir d'une correspondance entre le seuil de plage de distance prédéterminé et une fréquence d'échantillonnage ponctuel, d'une fréquence d'échantillonnage ponctuel correspondant à la distance.

6. Dispositif électronique selon la revendication 5, l'acquisition d'informations d'attribut de l'objet cible et la détermination d'une fréquence d'échantillonnage ponctuel correspondant aux informations d'attribut comprenant en outre :
l'acquisition d'informations géographiques correspondant aux informations d'adresse actuelle, et la détermination d'une fréquence d'échantillonnage correspondant aux informations d'attribut et aux informations géographiques ; ou
l'acquisition d'informations d'environnement actuel correspondant aux informations d'adresse actuelle, et la détermination d'une fréquence d'échantillonnage correspondant aux informations d'attribut et aux informations d'environnement actuel.

7. Dispositif électronique selon la revendication 5, le procédé comprenant en outre :
s'il est détecté que l'objet cible se trouve actuellement dans un état anormal, dans lequel l'objet cible rencontre une perte, un dommage ou une perte de contact, et que la fréquence d'échantillonnage ponctuel n'est pas atteinte, le téléchargement des informations anormales surveillées.

8. Dispositif électronique selon la revendication 5, le procédé comprenant en outre, avant de recevoir les informations d'adresse actuelles de l'objet cible transmises par le dispositif de collecte :
la détermination des informations d'adresse cible pendant le fonctionnement de l'objet cible, et l'établissement d'une correspondance entre les informations d'adresse cible et l'identifiant, l'identifiant étant un numéro parmi un numéro de commande, un numéro de série et un numéro de plaque d'immatriculation.

9. Support lisible par ordinateur stockant sur celui-ci un programme informatique qui, lorsqu'il est exécuté par un processeur, met en œuvre un procédé de collecte d'informations d'adresse, le procédé comprenant :
la réception d'informations d'adresse actuelle d'un objet cible transmises par un dispositif de collecte, et l'acquisition d'informations d'adresse de destination de l'objet cible d'après un identifiant de l'objet cible, le dispositif de collecte étant lié à l'objet cible ;
la détermination, sur la base d'une distance entre les informations d'adresse actuelle et les informations d'adresse de destination, d'une fréquence d'échantillonnage ponctuel correspondant à la distance, la fréquence d'échantillonnage ponctuel étant un intervalle de temps entre la collecte d'informations d'adresse adjacentes ; et
la transmission de la fréquence d'échantillonnage ponctuel au dispositif de collecte, de telle sorte que le dispositif de collecte collecte les informations d'adresse de l'objet cible pendant le fonctionnement,
la détermination d'une fréquence d'échantillonnage ponctuel qui correspond à la distance comprenant :
lorsque la distance est supérieure au seuil de distance prédéterminé, l'acquisition d'informations d'attribut de l'objet cible, et la détermination d'une fréquence d'échantillonnage ponctuel correspondant aux informations d'attribut, lesdites informations d'attribut étant des informations sur une classification de niveau et pouvant être acquises par analyse directe de l'objet cible ou sur la base d'une remarque d'un utilisateur ;
lorsque la distance est inférieure ou égale au seuil de distance prédéterminé, la détermination, à partir d'une correspondance entre le seuil de plage de distance prédéterminé et une fréquence d'échantillonnage ponctuel, d'une fréquence d'échantillonnage ponctuel correspondant à la distance.

10. Support lisible par ordinateur selon la revendication 9, l'acquisition d'informations d'attribut de l'objet cible et la détermination d'une fréquence d'échantillonnage ponctuel correspondant aux informations d'attribut comprenant en outre :
l'acquisition d'informations géographiques correspondant aux informations d'adresse actuelle, et la détermination d'une fréquence d'échantillonnage correspondant aux informations d'attribut et aux informations géographiques ; ou
l'acquisition d'informations d'environnement actuel correspondant aux informations d'adresse actuelle, et la détermination d'une fréquence d'échantillonnage correspondant aux informations d'attribut et aux informations d'environnement actuel.

11. Support lisible par ordinateur selon la revendication 9, le procédé comprenant en outre :
s'il est détecté que l'objet cible se trouve actuellement dans un état anormal, dans lequel l'objet cible rencontre une perte, un dommage ou une perte de contact, et que la fréquence d'échantillonnage ponctuel n'est pas atteinte, le téléchargement des informations anormales surveillées.

12. Support lisible par ordinateur selon la revendication 9, le procédé comprenant en outre, avant de recevoir les informations d'adresse actuelles de l'objet cible transmises par le dispositif de collecte : la détermination des informations d'adresse cible pendant le fonctionnement de l'objet cible, et l'établissement d'une correspondance entre les informations d'adresse cible et l'identifiant, l'identifiant étant un numéro parmi un numéro de commande, un numéro de série et un numéro de plaque d'immatriculation.
